**Europäisches Patentamt**

(19) **European Patent Office**

**Office européen des brevets**

(11) Publication number: **0 064 055**
**B1**

(12) **EUROPEAN PATENT SPECIFICATION**

(45) Date of publication of patent specification: **04.03.87**

(21) Application number: **81901024.0**

(22) Date of filing: **06.11.80**

(86) International application number:
**PCT/US80/01484**

(87) International publication number:
**WO 82/01509 13.05.82 Gazette 82/12**

(51) Int. Cl.⁴: **B 32 B 5/28, B 32 B 17/10,**
**B 32 B 27/42**

(54) **PHENOL FORMALDEHYDE RESOLES AND LAMINATES.**

(43) Date of publication of application:
**10.11.82 Bulletin 82/45**

(45) Publication of the grant of the patent:
**04.03.87 Bulletin 87/10**

(84) Designated Contracting States:
**DE FR GB NL SE**

(56) References cited:
**GB-A- 292 629**
**GB-A- 806 273**
**GB-A-2 004 901**
**US-A-3 226 364**
**US-A-4 120 847**
**US-A-4 122 144**
**US-A-4 264 671**

**Vansheydt & Simonova, Plasticheskie Massy Sbornik Statei: pp. 129-140 (1939)**

**The file contains technical information submitted after the application was filed and not included in this specification**

(73) Proprietor: **WEYERHAEUSER COMPANY**
**Tacoma, WA 98477 (US)**

(72) Inventor: **GILLERN, M. Frank**
**4800 46th Avenue S.W.**
**Seattle, WA 98116 (US)**
Inventor: **OITA, Katashi**
**2113, 13th Avenue South**
**Seattle, WA 98144 (US)**
Inventor: **TENG, Robert J.**
**29703-3rd S.W.**
**Federal Way, WA 98003 (US)**
Inventor: **TIEDEMAN, George T.**
**8634-46th Avenue S.W.**
**Seattle, WA 98116 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Background of the disclosure
Field of the invention

The field of this invention is phenol-formaldehyde resols, processes for their preparation and laminates made therefrom. More particularly, the resols of interest are useful in making fire-resistant resinglass laminated products.

Description of the prior art

Important laminated products are made by impregnating glass fiber cloth with polyesters or epoxy polymers, followed by curing to a stable state by heating under pressure. The finished laminates are known for their excellent mechanical strengths because the resins bond extremely well to the glass fibers. However, both polyesters and epoxies have little resistance to fire. Both materials burn, producing heavy smoke.

It has long been recognized that acidic and mildly alkaline phenol formaldehyde resins are among the most fire resistant of the common polymers. They do not burn readily and are self-extinguishing. Also, they produce little smoke or "punking" after exposure to flame. What fumes are generated are of lower toxicity than those produced by most materials commonly in use today.

In GB—A—292629 there is disclosed a process for the manufacture of phenol formaldehyde condensation products which consists in mixing phenol or metaparacresol with a quantity of formol greatly in excess of the equimolecular proportion and with a known catalyst; in heating the mixture to boiling point during a period which does not exceed practically one hour; in cooling it to about 50 degrees C.; in neutralizing the catalyst if it be alkaline; allowing the mixture to stand and then separating the resulting liquid resinous substance from the upper liquid layer; in heating to a temperature above 100 degrees C.; and moulding the product, under heat, in a mould at a temperature of 90—112 degrees C. for a variable length of time.

Several disadvantages of phenol-formaldehyde resins have, however, prevented development of a laminate having the necessary commercial qualities. For example, it is important in laminate production that the resin remain in a certain viscosity range for the period of time necessary to incorporate it into the substrate. But it has been difficult to design uncured phenol-formaldehyde P/F resins that readily flow and penetrate the substrate material, yet are retained in the laminate during pressing. Adjusting viscosity is difficult because a typical resol cures very rapidly to an unworkable viscosity within a narrow temperature range.

Viscosity control has often been approached practically by diluting the resin with organic solvents, since the resoles are not generally water soluble. The solvents, such as the various lower alkyl alcohols, present potential safety and fire hazards to workers. Cost is also increased.

Another competitive disadvantage of P/F resin laminates has been their intense color. Cured products are generally dark brown to black. Therefore, a coating must be applied if a light color finished product is desired.

The stability or storage life of the resol intermediate, while awaiting use in the laminating process, has also caused difficulty in the past. P/F resins tend to advance rapidly and change viscosity if not refrigerated.

It is an object of the present invention to describe a phenolformaldehyde resol that has a balance of functional groups, in terms of how the formaldehyde is bound to phenolic nuclei, that results in resol characteristics particularly suitable for making laminates. Thus, major advantages of the phenol-formaldehyde resols of this invention are that they may be easily processed into finished resin-glass laminates and have superior fire resistance and lower smoke-generating properties than prior-art phenol-formaldehyde resins.

An object of the invention is to provide a resol that is water dilutable, prior to curing. The resol also readily wets out laminate substrate materials without the use of difficult-to-handle organic solvents.

It is a further object of this invention to provide a P/F resol that can be cured in a single heating step to full mechanical strengths.

Subjects of the present invention are:

a) A phenol formaldehyde resol, comprising a condensation product of formaldehyde and phenol in the molar ratios of 2.0—3.2:1, said resol being curable to an insoluble cross-linked, infusible solid at 100—150°C, wherein the formaldehyde content of the resol, prior to curing, analysed by carbon-13 nuclear magnetic resonance spectra, is bound to and distributed among phenol nuclei of the resol as formal groups of the form $Ph—(CH_2—O)_n—CH_2—OH$ $n \geq 1$; ether groups of the form $Ph—CH_2—O—CH_2—Ph$; methylol groups of the form $Ph—CH_2OH$ in an amount of about 9—40 molar percent; methylene groups of the form $Ph—CH_2—Ph$; and free formaldehyde in an amount of about 10—20 molar percent, wherein Ph indicates a phenol nucleus, which is characterized in that said resol is water-dilutable, prior to curing, and includes about 30—40 molar percent of said formal groups, about 5—10 molar percent of said ether groups and about 10—20 molar percent of said methylene groups, wherein the percentages indicated are the percent of the indicated group with respect to the total moles of formaldehyde charged to the resol system;

b) a process for making such a phenol-formaldehyde resol as described above comprising:

2

— mixing phenol, water and 0.5—2.2 moles per 100 moles of phenol of an alkali catalyst material, wherein the pH of the reaction mixture is 7.0—10.9;

— adding formaldehyde to the reaction mixture such that the ratio of formaldehyde to phenol is 2.0—3.2:1;

— heating said reaction mixture to reflux temperature, with stirring, at a uniform rate over about a 1-hour period;

— refluxing said mixture until a viscosity of about 0.4—2.6 Pa · s (400—2 600 centipoise) at 50—78% resin solids content is attained;

— cooling the reaction mixture to 50°C; and

— adjusting the pH of the mixture with an acid to a pH of 3.0—7.0; and

c) a process for forming a heat-curable, phenol-formaldehyde glass fiber prepreg, including a glass fiber substrate, comprising:

— saturating said substrate with a phenol-formaldehyde resol as described above;

— squeezing said saturated substrate until the desired level of resol is contained in the web;

— heating said matrix at 100—140°C for at least 2.0 minutes until a resin content of at least 30% is fixed in the web and the concentration of volatile materials remaining does not exceed 1.5 weight percent; as well as

d) the heat-curable phenol-formaldehyde resin-glass fiber prepreg obtained in the process (c).

The structure of the resol of the invention may be adjusted by varying resin cooking conditions to provide curing characteristics that are compatible with existing equipment and processing conditions designed for making polyester or epoxy laminated panels.

The resol products of the invention range in color from white to beige, depending upon cure temperature.

The resol of this invention also has an extended storage life. That is, it does not significantly change in viscosity or advancement for six months or longer at room temperature. The resol remains usable over time without the necessity of making process changes in manufacturing due to deterioration.

Most phenol-formaldehyde reaction products contain, in large proportions, formaldehyde attached to phenol rings as methylol groups (—CH₂OH) and methylene bridges (—CH₂—). When mildly heated, the methylol groups readily condense with each other to form ethers or displace reactive protons on the phenolic rings. Where a heat-curing resol is desired, the initial reaction between phenol and formaldehyde is catalyzed with a base, which is known to produce a predominance of methylols. These resins are called resols and their degree of condensation or molecular weight is often referred to as A, B or C-stage. The initial addition of formaldehyde to the phenol ring and partial condensation produces an A-stage resin. Continued heating causes the resin to increase in molecular weight, primarily by chain lengthening. The resin decreases in water solubility, becoming more viscous and rubbery, although retaining thermoplastic characteristics. This is a B-stage resin. Continued heating results in a cured, three-dimensionally cross-linked, insoluble and infusible solid, commonly termed a C-stage resin. Whiteside, *Phenolic Resins* 32 (2d Edition 1967).

The prior art has long recognized that the structural arrangement or distribution of formaldehyde in a P/F resin is the principal source of its characteristic properties.

Raw material ratios, catalysts and processing conditions have been varied in the past in attempts to produce resins having certain formaldehyde distributions in the hope of achieving desired characteristics. The tailoring process, however, has been hampered because resins were extremely difficult to analyze structurally. As a result, the chemist-inventor has usually had only an incomplete understanding of the structural results produced by a particular set of processing conditions.

There are now tools permitting detailed analysis of the phenol-formaldehyde structure. Proton magnetic resonance spectroscopy (PMR) has in the last 15 years provided insight into the chemical structure of the uncured, solvent-soluble resins. Initially, PMR permitted direct measurement of the relative amounts of methylene bridges at different positions on the phenolic ring. Further work by Woodbury, et al, entitled "Proton Magnetic Resonance Study of the Structure of Phenol-Formaldehyde Resins" *Journal of Polymer Science*: Part A, 1079 (1965) has shown that resoles are structurally a mixture of phenolic nuclei joined by methylene (—CH₂—) and ether (—CH₂—O—CH₂—) bridging, while formal (—CH₂—OCH₂OH) and methylol (—CH₂OH) groups are attached at various phenolic ring positions. While others have recognized the importance of the ether, methylol and methylene groups, Woodbury was the first to recognize the substantial presence of stable benzyl hemi-formals (Ph—(CH₂O)ₙ—CH₂OH, n≥1). Woodbury expressed the belief that the presence of the formals must have an important influence on the condensation reaction during prepolymer synthesis and subsequent cure. He suggested that effects and contributions needed to be explored further experimentally.

Summary of the invention

The resol of this invention is a water-dilutable, condensation product of formaldehyde and phenol in molar ratios of 1.9—5:1, preferably 2,0—3,2:1, characterized by carbon-13 nuclear magnetic resonance spectra as having at least about 30 molar percent of the total resin formaldehyde content of the resol bound in benzyl formal groups of the form Ph—$(CH_2O)_n$—$CH_2OH$ wherein $n \geq 1$ and less than about 40 molar percent of the total resin formaldehyde content bound in methylol groups of the form Ph—$CH_2OH$, wherein Ph is a phenol nucleus. The resol cures to a white or low-color, insoluble, infusible solid by heating to 100—150°C.

A novel process for making the resol characterized above comprises (a) mixing phenol, water and alkaline catalyst, limited to 0.5—2.2 moles of catalyst per 100 moles of phenol, with formaldehyde in the amount of 1.9—5.0 moles per mole of phenol; (b) heating the mixture to reflux temperature at the uniform rate over about a 1-hour period; (c) refluxing the mixture until a target viscosity of 0,4—0,5 Pa · s (400—500 centipoise) at 50—75% resin solids content is attained; (d) cooling the mixture to 50°C; and (e) neutralizing the mixture with an acid to a pH range of 3—7 preferably pH 3—6, most preferably to a pH range of 4—5. The finished resin intermediate is water dilutable and can be dissolved in a 20% isopropyl alcohol solution in ratios of 0.5 parts resol to one part solution.

The finished resol is particularly suitable for making low-color, highly fire-resistant resin-glass fiber laminated products that have mechanical strengths comparable with epoxy, polyester and polyimide resin glass laminates.

A resin-glass "prepreg" is prepared by saturating a glass fiber web with the resol characterized above. The saturated web is squeezed to a desired resin content and B-staged or advanced by the application of heat at 100—140°C for about 2.0 minutes. The finished prepreg contains at least about 30% phenol formaldehyde resin and less than about 1.5% volatile content.

The finished prepreg sheets, may be cut to a desired shape and assembled into a precure laminate. The precure laminate is pressed at contact pressure 0,14—1,03 bar (2—15 psig) and heated to 100—130°C for 10—30 minutes. The laminate is then pressed at a higher pressure of 1,03—1,379 bar (15—200 psig) and heating is continued at 100—140°C. The laminate cures to the insoluble, infusible state having attained maximum mechanical strength.

Brief description of the drawings

Figure 1 is a carbon-13 Nuclear Magnetic Resonance ($^{13}$C NMR) spectrum of a resol of this invention at a formaldehyde-phenol ratio (F/P) of 3.14.

Figure 2 is a $^{13}$C NMR spectrum of the resol at an F/P of 2.65.

Figure 3 shows a $^{13}$C NMR spectrum of a resol of the invention at an F/P of 5.

Detailed description of the preferred embodiment

The resol

In the resol of this invention the formaldehyde charged to the process is bound to phenolic nuclei as:

(1) addition products:
    (a) benzyl formal groups —PH—$(CH_2O)_nCH_2OH$, $n \geq 1$;
    (b) methylol groups—Ph—$CH_2OH$; and

(2) condensation products:
    (c) methylene bridged groups—Ph—$CH_2$—Ph, and
    (d) ether bridged groups—Ph—$CH_2O$—$CH_2$—Ph, wherein Ph is a phenol nucleus.

Some of the formaldehyde in the resol product remains in an unreacted state.

The resol of this invention is characterized by (1) the molar percent of formaldehyde present in the above-indicated functional groups, and (2) a carbon-13 nuclear magnetic resonance spectra. The carbon-13 NMR characterization technique was selected because the more commonly used proton NMR spectroscopy does not provide adequate resolution of functional group peaks and requires troublesome dehydration and acetylation procedures. The lack of quantitation capability of the carbon-13 NMR spectra for drastically different functional groups was circumvented by supplemental use of proton NMR where necessary.

The NMR characterization requires determination of spectra for model compounds of the expected reaction products to establish peak identities for each chemical species. This includes those that differ only with respect to the position on the aromatic ring where the group of interest is bound. The area under the identified peaks is proportional to the amount of the particular substituent and can be determined by integration. These values are then used to establish quantitatively the molar percent of the particular group, based on the total moles of formaldehyde charged to the synthesis process. Molecular weight and free, unbound formaldehyde are also determined from the data generated.

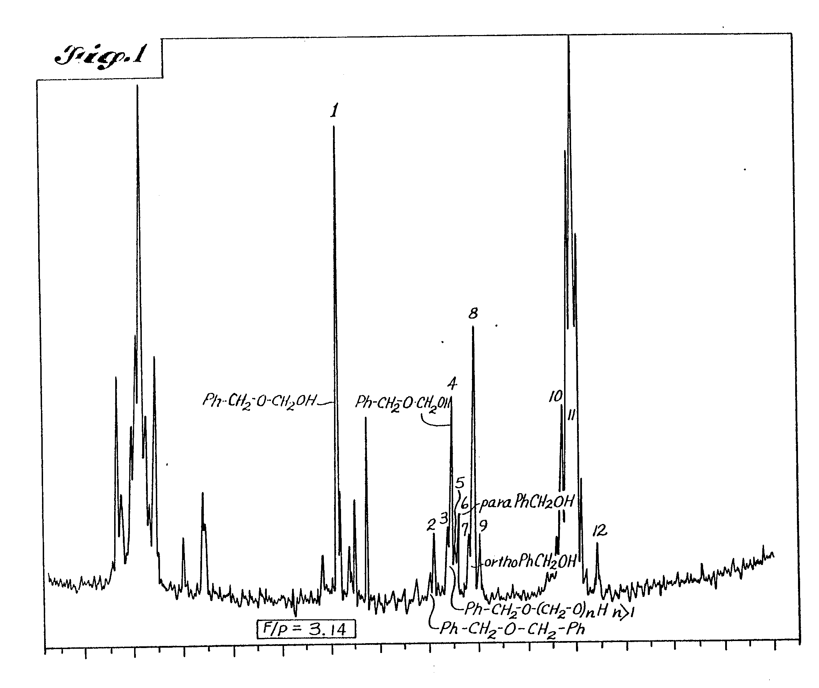

Referring to Figure 1, a carbon-13 NMR spectrum of the resol made with a formaldehyde to phenol (F/P) molar ratio of 3.14, is shown. The peaks showing the benzyl formal and methylol functional group structures are labeled with the appropriate chemical structure, wherein Ph is a phenol nucleus.

Peaks 1 and 3—5 are benzyl formal groups. The formal group has been found to be fairly stable, at least below 160°C, and thus contributes substantially to the uncured resol's unique physical handling or processability properties. Peaks 1, 4 and 5 are identified as monoformals of the structure Ph—$CH_2O$—$CH_2OH$. Peak 3 has been tentatively identified as a low concentration of benzyl polyformals of the type Ph—$CH_2$—O—$(CH_2$—O$)_nH$, wherein $n > 1$.

Peak 2 is identified as formaldehyde content of the resol distributed in benzyl ether groups of the structure Ph—$CH_2$—O—$CH_2$—Ph.

Methylol groups, which are also important in determining the desirable characteristics of the resol, are identified as peaks 6, 7, 8 and 9 in Figure 1. Peak 6 is para-methylol and peaks 7—9 are ortho-methylol groups. These end groups correspond to the structure Ph—CH$_2$OH.

Peaks 10 and 12 are identified as methylene bridged phenolic nuclei of the type Ph—CH$_2$—Ph.

The large peak 11 is the dimethylsulfoxide solvent used to dissolve the sample in the NMR study.

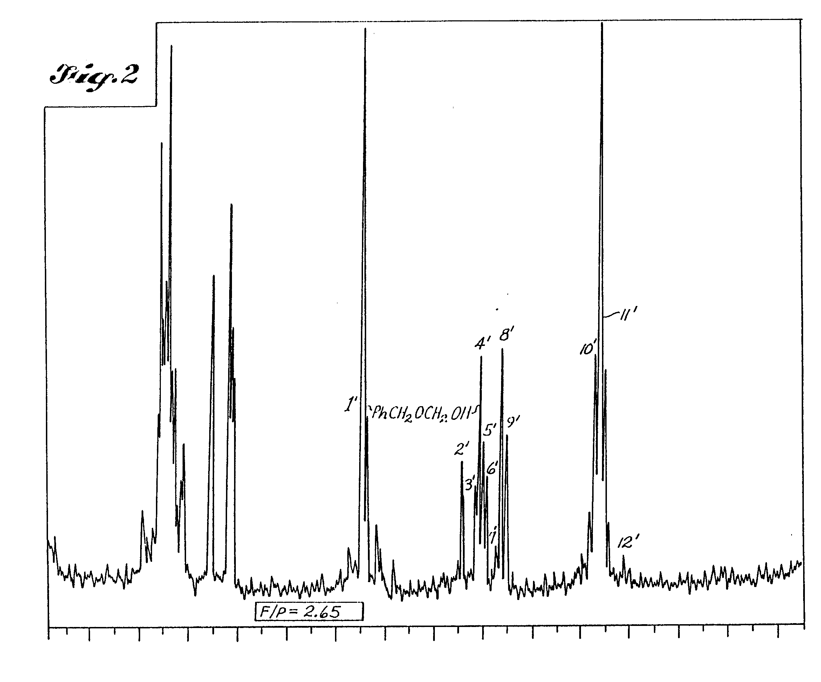

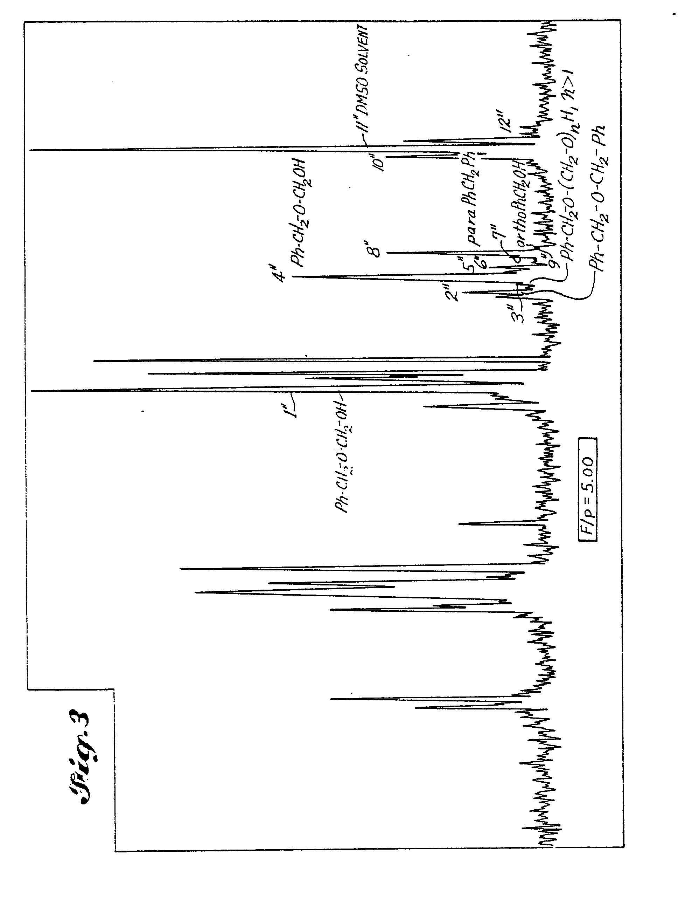

Figures 2 and 3 show carbon-13 NMR spectra for other resols of the invention wherein the F/P ratio charged to the synthesis reaction is 2.65 and 5.00, respectively. The spectra peaks, labeled with the (') or ('') are defined as in Figure 1. The spectra differ only quantitatively, as will be shown below in the examples.

With the peaks of the NMR spectra properly identified, the quantitative amounts of the various functional groups are calculated by integrating the areas under the curve trace. The proton NMR spectra were used to determine methylenes and quantitatively relate the methylene group and one of the oxymethylene species. The carbon-13 spectra were used to determine oxymethylene species.

The following examples describe resols of the invention and how they are made.

Example 1: Molar ratio (F/P)=3.14

In a 4-liter reactor with cooling coil and stirrer, 9.992 kg of 90.8% phenol, 2.814 kg of water, 0.079 kg of lithium carbonate (1.11 moles/100 moles phenol), and 9.588 kg of 94.7% paraformaldehyde flakes were mixed at 30°C. The mixture was heated, at a uniform rate, while stirring, to 105°C in one hour. An exothermic reaction started at 75°C and heating was reduced. When the temperature reached 91°C, heating was stopped until the exotherm subsided. The condensation reaction was continued at refluxing temperature, 99—103°C, until the resol viscosity reached about 0,444 Pa · s (444 cps). The reaction required 46 minutes, after the initial 1-hour heatup.

The resol was cooled quickly to 50°C. 0.224 kg of citric acid was added and the mixture stirred for 5 minutes. The acid dispersed completely. The resol was finally cooled to 25°C. The final viscosity was 0,627 Pa · s (627 cps) at a solids content of 64.89%. Final pH was 4.55.

Example 2: F/P=2.65

0.542 kg of 93.2% phenol, 0.003 kg of lithium carbonate (0.757 mole/100 moles of phenol) and 0.446 kg of 95.8% paraformaldehyde flake were reacted according to the procedure of Example 1. The refluxing temperature was maintained at 114—115°C for 50 minutes after 1-hour heatup. Then the reaction mixture was cooled to 90°C and held for 15 minutes until the resol reached a viscosity of 0.452 Pa · s (452 cps).

The resol was cooled to 50°C and neutralized with 0.0085 kg of citric acid. The final resol had a viscosity of 0,569 Pa · s (569 cps) at 25°C, solids level of 72.63%, and pH of 4.33.

Example 3: F/P=2.00

2.437 kg of 90.8% phenol, 0.009 kg of lithium carbonate (0.548 mole/100 moles phenol) and 1.522 kg of 92.6% paraformaldehyde flake were reacted according to the procedure of Example 1. The refluxing temperature was maintained at 108—110°C. The reaction was stopped when the resol viscosity was 0,443 Pa · s (443 cps.) The reaction required 38 minutes, after an initial 1-hour heatup.

The resol was cooled to 50°C and neutralized with 0.030 kg of citric acid at 50°C with stirring for 5 minutes. The final resol had a viscosity of 0,569 Pa · s (569 cps) at 25°C, a solids level of 72.8% and pH of 4.53.

Example 4: F/P=5.00

167.8 g of 93.2% phenol, 62.6 g of water, 1.8 g of lithium carbonate (1.47 moles/100 moles phenol), and 267.8 g of 93.2% paraformaldehyde flake were reacted according to the procedure of Example 1. The paraformaldehyde was added in two portions. The refluxing temperature was maintained at 102—103.8°C for 63 minutes after the initial 1-hour heatup. The resin had a viscosity of 0,443 Pa · s (443 cps) at this point.

The resol was neutralized as in Example 1. The cooled resol had a viscosity of 0,485 Pa · s (485 cps) solids level of 59.44%, and pH of 7.22, at 25°C.

Example 5—NMR data

Carbon-13 NMR spectra were obtained for the above examples using a Varian CFT-20 spectrometer manufactured by Varian Company of Palo Alto, California. Proton NMR spectra were obtained using a Varian EM 360A and a Perkin-Elmer Model R-24 proton NMR spectrometer manufactured by Perkin-Elmer Corporation of Santa Ana, California. The curve data were integrated to determine quantitatively how the formaldehyde charged to each reaction in the above example was distributed on the phenolic nuclei. The results are presented in Table 1.

TABLE 1—Distribution of formaldehyde in the uncured resol

| | | | Distribution of formaldehyde, mole % of indicated group | | | | |
|---|---|---|---|---|---|---|---|
| Example | F/P ratio | Catalyst $Li_2CO_3$ (moles/mole PhOH) | $CH_2$—O—$CH_2OH$ (formals) | $CH_2$—O—$CH_2$ (ethers) | $CH_2OH$ (methy- lols) | $CH_2$ (methy- lenes) | HCHO (free for- maldehyde) |
| 3 | 2.00 | (0.55) | 32.8 | 6.6 | 38.3 | 10.8 | 11.5 |
| 2 | 2.65 | (0.76) | 36.2 | 8.4 | 20.5 | 16.9 | 18.1 |
| 1 | 3.14 | (1.12) | 34.4 | 7.8 | 27.7 | 15.9 | 14.6 |
| 4 | 5.00 | (1.47) | 37.4 | 5.1 | 9.4 | 10.1 | 38.0 |

TABLE 2—Additional structural data

| Example | No. of sub- stituents per phenolic nucleus | Titrated free HCHO (mole %) | Ratio para/ortho methylols | Ave No. Ph nuclei/ molecule | MW (NMR) | Resin solids % | Gardner- Holdt viscosity |
|---|---|---|---|---|---|---|---|
| 3 | 1.43 | 8.0 | 0.17 | 1.81 | 257 | 72.8 | TU |
| 2 | 1.69 | — | 0.20 | 2.27 | 340 | 68.0 | ST |
| 1 | 2.16 | 12.4 | 0.24 | 2.64 | 435 | 64.9 | QR |
| 4 | 2.05 | 23.1 | 0.19 | 2.73 | 483 | 59.4 | RS |

Comparison with prior art resins

Three resins of the prior art, selected because of similarities of qualitative characterization of the resin or process with the resols of this invention, were made according to the teachings of the publications describing them. The structures of these resins with respect to formaldehyde distribution on the phenol nuclei were then measured using carbon-13 and proton NMR analysis. The following examples describe the process of their manufacture and resulting spectra.

Example 6: Pantke resin (U.S. patent 1,909,786) F/P=2.52

1.805 kg of 100% phenol and 1.532 kg of 94.5 paraformaldehyde flake were mixed thoroughly at 50°C with 268.8 g of 20% NaOH solution (7.07 moles/100 moles phenol). The mixture was heated rapidly to 60°C. An exothermic reaction began at 53°C and cooling maintained the mixture temperature at 65°C for 3 hours.

The resulting resin was cooled to room temperature and a 1 kg sample taken. This portion of the resin (Pantke resin intermediate resole) was stabilized by mixing with 0.031 kg of lactic acid. The intermediate had a viscosity of 0,627 Pa · s (627 cps) at 74% solids and a pH of 7.65.

The other portion of the resin mixture was dehydrated under 0,81 bar (24″ Hg) vacuum for about 30 minutes until the pot temperature of the reactor reached 65°C. Then 0.084 kg of lactic acid was added and thoroughly mixed. The resulting product had a viscosity of 2,930 Pa · s (2930 cps) at 79.6% solids content and a pH of 7.00.

Example 7: Klemke (U.S. patent 3,634,317) F/P=2.63

0.010 kg of triphenyl phosphite, 0.190 kg of 100% phenol, 0.200 kg of 40% formaldehyde and 5.0 ml of 40% NaOH solution were mixed and heated rapidly to reflux at 102°C. Cloudiness appeared after 1 hour 16 minutes at which time .200 kg of 40% formaldehyde was added. Refluxing of the mixture was continued for 8 minutes, after which viscosity was 0,200—0,250 Pa · s (200—250 cp).

The resin was cooled to 40°C and dehydrated between 30—39°C until a clear resin was obtained after removing 0.234 kg of H2O. The resulting resin had a solids content of 77.7% and a pH of 7.10.

Example 8: Vansheydt & Simonova, "production of colorless resins from phenol and formaldehyde," Plasticheskie massy, sbornik statei: pp 129—140 (1939)

0.412 kg of 100% phenol, 0.0123 kg $Na_2CO_3$ catalyst and 0.527 kg of 49.9% formalin were charged to a stirred reactor at room temperature. The catalyst comprised 3% by weight, based on phenol (2.65 moles of $Na_2CO_3$/100 moles of phenol). The F/P ratio was 2.00. The mixture was heated to 95°C over 30 minutes. This temperature was maintained for 75 minutes, after which phase separation began.

The resin was quickly cooled to 50°C and neutralized with 0.031 kg of citric acid monohydrate. The resin mixture was allowed to stand overnight at room temperature. The resulting supernatant layer was drawn off and discarded. The final resin had a pH of 4.5, a solids content of 67.8% and a viscosity of 2,700 Pa · s (2700 cps.)

Table 3 indicates the results of the carbon-13 proton NMR analysis of the prior art resins.

TABLE 3—Distribution of formaldehyde in resin—prior art

| Example | F/P | Catalyst (mole %) | Distribution of formaldehyde, mole% of indicated group | | | | |
|---|---|---|---|---|---|---|---|
| | | | —CH$_2$—O— CH$_2$—OH (formals) | —CH$_2$—O— CH$_2$— (ethers) | —CH$_2$OH (methy-lols) | —CH$_2$— (methy-lene) | HCHO (free formal-dehyde) |
| 6(a) (Pantke-dehydrated) | 2.52 | NaOH (7.07) | 24.6 | 5.6 | 54.8 | 9.6 | 4.6 |
| 6(b) (Pantke) | 2.52 | NaOH (7.07) | 24.4 | 6.5 | 54.7 | 7.8 | 6.5 |
| 7 (Klemke) | 1.80 | NaOH (3.51) | 13.0 | 4.9 | 48.0 | 30.9 | 3.3 |
| 8 (Vansheydt et al) | 2.00 | Na$_2$CO$_3$ (2.65) | 11.2 | 3.3 | 47.4 | 37.4 | 4.7 |

Panke of Example 6 was chosen as close prior art because of its recited low-color and fire-retardant properties. Comparing the Panke process with that of the resol of this invention, Panke uses considerably greater amounts of alkaline catalyst in the initial reaction. The effect of this is seen in comparing the carbon-13 NMR structural data of Table 3 with those of Table 1. The Panke resin is comprised of a lower amount of formals and higher amount of methylols. The finished resin of Panke is not water dilutable. The resulting resin is described as suitable for casting in open molds and requires about 100—200 hours to cure at 78—82°C. A plasticizer, generally glycerin, is required to keep the resin in a liquid form suitable for casting. The long cure time required of Panke would render it unsuitable for commercial laminate production. Increasing cure temperature to improve curing times appears limited since the inventor admits that the low-color advantage is destroyed above 100°C. No significant structural differences appear to result from the dehydration procedure used by Panke.

Klemke, of Example 7, describes a low-color, base-catalyzed resin. Here 3.51 mole percent NaOH and 1.6 mole percent triphenyl phosphite are used as catalysts. Referring to the NMR data, the Klemke resins have significant formal groups but only about half that of the resols of the invention. There is a comparable level of methylols. The process is complex, requiring a two-step addition of formaldehyde. The resol requires a 30—45% alcohol dilution to form a suitable laminating resol.

The Vansheydt article, Example 8, describes another low-color resin. The end product is a white, solid resin. For purposes of comparison of structure, a sample of the Vansheydt resin intermediate was taken just after phase separation of water had occurred. The processes of making the Vansheydt and resols of this invention are generally similar, except for levels of catalyst used and cooking times. The process of this invention uses about half the catalyst used by Vansheydt. The carbon-13 NMR results show that the Vansheydt resin comprises a relatively minor amount of formals, higher levels of methylol and a large amount of methylene bridges. The Vansheydt resin cannot be used for laminating without an organic solvent, if conventional laminating equipment were used. It is also noted that Vansheydt's resins require extended curing times of 100—120 hours at 80—85°C in order to retain low color.

In sum, significant process differences between the prior art low-color resins and the resols of this invention appear in the level of base catalyst usage and in time-temperature relationships during the cooking process. The 0.50—2.2, preferably 0.5—1.5, moles of catalyst per 100 moles of phenol used in the process of this invention cause the reaction mixture to remain in the pH range of 7.0—10.9, preferably 7,2—8,2, during cooking. A low level of base catalyst seems critical to bring about the observed unique, relatively high-formal and low-methylol group contents of the resols. These structural differences result in the resol characteristics that permit use of the resol in conventional glass laminating processes. This stable "window" of the resol of this invention, during which the resol remains in a workable viscosity range over a relatively wide temperature range, is not exhibited by Vansheydt or by any other known P/F resin.

One of the more subjectively measured characteristics of the resol of the invention is its initial low color and color stability over time, even after exposure to curing temperatures of about 150°C. At temperatures in the 150—175°C range, absorption of blue-green radiation increases slightly so that the resol appears light yellow. From 175—212°C, the yellow brightens. Not until the 212—225°C range is there overall darkening of the resin. All of the prior art resins darken appreciably at the 100°C level.

## The resin making process

The general process of the invention comprises the steps of: (a) mixing together reactive materials at room temperature; (b) heating the mixture to reflux conditions over a period of about one hour; (c) refluxing the mixture until the resulting resol reaches a desired viscosity range; (d) cooling the reaction to 50°C; and (e) adjusting the pH of the mixture to 3.0—7.0 with a weak acid.

The basic starting materials are phenol, formaldehyde and an alkaline catalyst. These materials may be of commercial grade and in any of several physical forms.

Initially, phenol and the catalyst are mixed with water. The water may make up about 30% by weight of the reaction mixture, depending upon the solids content desired in the finished resol. Formaldehyde is then charged to the reaction, preferably in the form of flake paraformaldehyde. The mixture is warmed to about 30°C to ensure rapid dissolution of the materials.

The pH of the reaction mixture is controlled between 7.0—10.9. The preferred range is 7.2—8.2. Almost any alkali material may be used as a catalyst in the initial addition reaction. For example, any of the well-known alkali metal hydroxides, carbonates or alkaline earth metal oxides may be used. Lithium carbonate catalyzed resols have particularly good low-color characteristics. Lithium carbonate is also preferred because its limited solubility in the reaction mixture acts to self-regulate pH in the desired range. Calcium carbonate, magnesium carbonate and calcium hydroxide have been used successfully. Other useful catalysts are p-toluene sulfonic acid, sodium carbonate or ammonium sulfate. With potassium or sodium hydroxide, a careful step-wise addition is required to adequately control pH.

Only a small amount of catalyst is permitted for the process of this invention, in contrast with prior art resin making processes. The lower catalyst level of this invention is a critical process limitation and favors distribution of formaldehyde as benzyl formal functional groups. Higher levels of alkali also tend to give more highly colored end products. With lithium carbonate, for example, as little as 0.5 mole per 100 moles of phenol (0.5 mole percent) charged to the process is sufficient, at a formaldehyde to phenol ratio (F/P) of 2:1. As much as 2.2 mole percent may be used, however, without adversely affecting the process. A preferred range is 0.5—1.5 moles of catalyst per 100 moles of phenol.

There are other advantages resulting from the low level of catalyst required for the process of this invention. For example, the low inorganic salt content improves aging characteristics of finished products. Fire properties are improved since the presence of inorganic salt makes a high contribution to the smoldering or "punking" characteristics of a phenolic. Electrical insulating properties are improved by keeping salt content low.

Generally, a lower catalyst concentration significantly increases the time required to complete the initial reaction. For example, at F/P=2, a typical reaction time, from room temperature mixture to a resol at a desired viscosity end-point, requires about 2.3 hours at 0.26 mole percent catalyst. At a 1 mole percent catalyst level, the typical reaction time is about 1.5 hours. However, the presence of catalysts much in excess of a 2.2 mole percent level, coupled with lower cooking temperatures, appears to favor higher methylol group formation than desirable in the end product.

The ratio of formaldehyde to phenol (F/P) is important in determining the characteristics of the finished resols, relative to one another, and determines which end use is appropriate to the particular product. The resols of this invention, exhibiting carbon-13 NMR spectra as shown in the drawings, may be made with F/P ranging from 1.9 to 5.0 moles per mole phenol. These resols, having high formal and low methylol group content characteristics, are particularly suitable for making resin-glass laminates, although they are not so limited. For example, adhesives and foams can be made with the resols of this invention. The F/P=5.0 resol may be used as a formaldehyde donor resin hardener.

The change in the F/P ratio changes only the relative quantities of the functional groups. As shown in the drawings, the carbon-13 NMRs are basically qualitatively identical, regardless of the F/P ratio.

An F/P ratio of at least 1.9 appears to be critical in obtaining significant benzyl formal linkages. If the ratio is much lower, a larger percentage of the formaldehyde charged to the reaction mixture is found in the resol as methylols, as known in the prior art structures. These high methylol content resols exhibit the usual rapid curing characteristics of the resins known in the art and are thus much less suitable for making laminates, as discussed above. At lower F/P ratios, more methylene bridges also result as is likewise known in the art.

F/P ratios greater than 5 are of limited interest since additional formaldehyde does not combine, or at least stably combine, with phenol. It remains in a relatively free state, evolving as a troublesome gas if the resol, is heated.

At low catalyst concentrations, there is a need to keep the reaction temperature high in order to get reasonable cooking times. Thus, reaction mixture is increased from room temperature, with stirring, to reflux temperatures. The heating rate is about one hour from room temperature to boiling, at atmospheric pressure.

The reflux temperature is a function of the composition of the mixture, but typically is in the 100—115°C range. Lower temperatures require more time. For example, decreasing the reaction temperature by 20°C may require twice as much time to cook the resol. The mixture is held at reflux temperature during which period formaldehyde attaches to the reactive ortho and para positions on the phenol ring as methylols or as methylol formals.

The addition reaction is stopped before the desired degree of water dilutability is lost. The exact end point depends upon the product application sought.

The end point of the addition reaction chosen depends upon the solid content of the resol to some extent. The resols of the invention are high solids content resols ranging between 50—78% solids by weight of the finished resin. This may be increased to 88—90% with vacuum dehydration. The finished solids content may be varied by varying the amount of water in the initial reaction mixture. Solids content for an F/P=3.14 resol typically ranges between 52—67%. For an F/P=2.0 resol the range is 59—78%.

At average solid contents the resols of these inventions will attain viscosities ranging between 0,4—2,6 Pa · s (400—2600 centipoise.) As a matter of convenience, the reaction end point is often determined based on viscosity. The finished resol is water dilutable. The following table shows typical dilutions as a function of F/P.

TABLE 4(a): Dilutability of invention resols with water

| F/P | 2.00 | 3.14 | 4.50 |
|---|---|---|---|
| Resol: water (25°C) | 0.55 | 0.06 | 0.54 |

For making laminates, the resol must be dilutable with non-flammable alcohol-water solvents. The following table indicates dilutability of the resols of this invention in low concentration alcohol solutions.

**0 064 055**

TABLE 4(b): Solubility of invention results in low concentration alcoholic solutions

| Solvent (wt% isopropyl alcohol in water) F/P= | Parts resol soluble per part solvent at indicated F/P mole ratio | | | |
|---|---|---|---|---|
| | 2.00 | 2.25 | 2.75 | 3.14 |
| 20% | 0.5:1 | 3.5:1 | 8.6:1 | 0.5:1 |
| 25% | 1.25:1 | 12:1 | >20:1 | 1.05:1 |
| 30% | 3.35:1 | — | — | 8.1:1 |

After the end-point is reached, the reaction mass is cooled to substantially halt the addition reaction. A temperature of 50°C is typical.

As a final step, the cooled resin is treated with an acid to adjust the pH of the mixture to a range of 3—7. Any acid may be used to provide the necessary stabilizing neutralization. Weak, polycarboxylic acids have been found to be most convenient for control in commercial processes. Lactic, citric and oxalic acids have been successfully used. Inorganic acids such as hypophosphorous, hydrochloric or even sulfuric acids have been used, although controlling acidity is much more difficult with the stronger acids, because of localized reactions. The preferred acid is citric acid.

Color level is reduced and color stability is also improved by neutralizing the basic catalyst. The neutralization apparently suppresses the formation of color compounds or at least causes those present to remain in a form that is colorless in the visible light range. Storage stability of the resin is also improved, permitting holding of the resol in an uncured state at ambient conditions for at least six months.

The characteristics of the resols of this invention constitute a "window" of viscosity and temperature that can be employed in producing laminates from these resols. The window effect refers to the fact that the resol remains in a flowable or workable condition, able to penetrate reinforcing substrates at temperatures and pressures typical of those now used to produce polyester or epoxy laminates. No other phenol formaldehyde resols are known which can be processed into laminates under the conditions typically used for processing epoxies and polyesters into laminates.

Glass-fiber laminates

Example 9: Glass-fiber laminates

The resols of this invention from Examples 1 and 3, described above, were used in making laminated products with glass-fiber cloth. The resols were used without solvent dilution.

Laminates are made up of layers of prepregs. A "prepreg" is defined as a base or substrate material, usually glass or cellulosic, that has been impregnated with a liquid resol and, subsequently, at least partially B-staged.

The laminating cloth selected was Uniglass style 778 glass fabric manufactured by Uniglass Industries of New York, New York. This material is commonly used in structural and semi-structural composite applications in the aerospace industry.

A silane fabric finish, UM 696 or UM 827-S furnished by Uniglass Industries of New York, New York, was applied to the fabric for improved resins-glass interface bonding. Both finishes are commonly used with epoxy, phenolic and polyimide laminating resins.

The resol was continuously applied to glass cloth. Final resol content of the cloth was adjusted by passing the saturated fabric through the nip of a pair of chrome plated steel squeezing rollers. The saturated cloth was then passed through a drying oven for a short period of time at moderate temperature. The oven heat partially cures, advances or B-stages the resin. B-staging increases the viscosity of the resin so it is retained by the cloth during further processing into laminates.

The following table outlines the characteristics of the impregnated fabrics or prepregs.

11

TABLE 5: B-staged resin impregnated glass cloth

| Resin (ex.#) | Roll gap mm (in.) | Oven speed m/min (ft/min) | Exposure time (min) | Oven temp (°C) | Finished impregnate characteristics | | | |
| --- | --- | --- | --- | --- | --- | --- | --- | --- |
| | | | | | Resin content (wt.%) | Volatile (wt.%) | Flow (%) | Gel time (min/sec) |
| 1(a) | 12,7 (0.5) | 0,152 (0.5) | 5.4 | 121—124 | 44.8 | 1.42 | 22.3 | 2'41'' |
| 1(b) | 11,4 (0.45) | 0,152 (0.5) | 5.4 | 122—123 | 40.4 | 1.24 | 11.8 | 3'50'' |
| 1(c) | 12,2 ( .48) | 0,152 (0.5) | ·5.4 | 118—127 | 38.5 | 1.59 | 16.5 | 2'53'' |
| 1(d) | 11,7 ( .46) | 0,152 (0.5) | 5.4 | 121—123 | 40.0 | 1.40 | 12.4 | 3'28'' |
| 1(e) | 12,2 ( .48) | 0,229 (0.75) | 3.6 | 121 | 39.1 | 2.14 | 23.2 | 6'35'' |
| 1(f) | 12,2 ( .48) | 0,305 (1.0) | 2.7 | 121 | 35.9 | 2.08 | 23.7 | 7'36'' |
| 3(a) | 12,2 ( .48) | 0,152 (0.5) | 5.4 | 132—138 | 42.1 | 1.63 | 19.3 | 6'14'' |
| 3(b) | 12,2 ( .48) | 0,152 (0.5) | 5.4 | 133—137 | 40.9 | 1.54 | 19.3 | 7'38'' |
| 3(c) | 14,0 ( .55) | 0,152 (0.5) | 5.4 | 118 | 43.9 | 3.68 | 30.6 | 13'54'' |
| 3(d) | 12,2 ( .48) | 0,152 (0.5) | 5.4 | 134—138 | 41.4 | 1.50 | 18.9 | 5'42'' |
| 3(e) | 12,7 ( .50) | 0,076 (0.25) | 10.8 | 132—138 | 41.7 | 0.99 | 12.5 | 6'13'' |

A typical prepreg specification for the impregnated cloth for producing laminates having suitable tensile, flexural and compressive strengths for structural use is: (1) 41±3% resin content; (2) 5—27% flow; (3) 2—18 minutes gel time; and (4) less than 1.5% volatile content.

The resin solids weight percent content is determined by heating a resin-filled specimen in an air circulating oven at 121,1±2,78°C (250±5°F) for 10 minutes, cooling in a desiccator and weighing. The specimen is then placed in a muffle furnace at 566,6±27,8°C (1050±50°F) until the resin is completely burned away. The remaining material is weighed and the percent resin solids content calculated.

"Flow" is determined in accord with U.S. Gov Specification MIL-G-55636 entitled Glass Cloth, Resin Preimpregnated (B-Stage).

"Gel time" is determined by placing a number of specimens in a press between platens heated to 121,1±2,78°C (250±5°F). Sufficient pressure is applied to create a bead of resin around the edge of the test specimens. A stop watch is started as soom as press pressure is applied. The resin bead is probed with a wood or glass rod until the specimen has gelled, indicated by the bead's reaching a rubbery "feel" or texture. Elapsed time is "gel time."

Percent volatiles is determined by weighing a specimen followed by heating in an air circulating oven regulated at 121,1±2,78°C (250±5°F). The sample is cooled in a desiccator and reweighed. The weight percent volatiles may then be calculated from the weight data.

The finished resin content of the prepreg is determined by the solids content, viscosity and temperature of the particular resin used. Resin content, as well as other important characteristics such as flow, volatiles content and gel time can also be varied by changing the gap setting on the roll nip, the speed of sheet through the curing oven and oven temperature.

Referring to Table 5, the maximum B-stage temperature for the Example 1 (F/P=3.14) group appears to be 125±5°C for a 5-minute oven exposure time, if the desired specifications outlined above are to be met. Blistering occurs at temperatures above 125—130°C.

The maximum B-staging temperature in the oven for Example 3 resoles appears to lie between 135—145°C. Blistering occurs at 145°C. The specifications for structural laminates, indicated above, are met using oven exposure times of 5.4—10.8 minutes at 125±5°C. These conditions repeatably produce impregnated cloth from which good press grade laminates can be made, as discussed below. Example 1(c) indicates that if the staging temperature is too low, advancement may not be adequate. Volatiles, flow and gel time are higher than the selected specification ranges, where staging is inadequate.

Generally the gel times of Example 1 are half those of the Example 3 resoles. Example 3 group resin wet-out of the glass fabric, as evidenced by resin retention, is superior to that of the Example 1 resins. Example 3 resins advance slower than the Example 1 group but can be B-staged at higher temperature.

**0 064 055**

The last three examples of group 1, 1(d)—1(f), indicate the relationship between the length of oven exposure time and final impregnated cloth characteristics. There appears to be little difference between 2.7 and 3.6 minutes. The longer times of 5.5 minutes produces improved advancement, as indicated by higher resin content and lower volatiles, flow and gel time.

Where low ambient temperatures prevail, high viscosities can cause processing difficulties. Warming of the starting materials to about 30°C prior to impregnation of the glass overcomes these problems. Alternatively, a dilute solution of alcohol in water can be used to modify viscosity. The concentration of the alcohol solution used should be minimized to decrease handling of flammable liquids.

Following B-staging, the finished impregnated cloths or "prepregs" containing the resins of Examples 1 and 3 were cut to size. Twelve plies of impregnated cloth were stacked between two flat press plates to make up the body of the laminate or a "precure" laminate. The press was then closed and heated to curing temperature.

The critical temperature for cure initiation appears to be about 100°C for both of the Examples 1 and 3 resin groups. Press closing pressure, cure time, and press cycling were varied, as indicated in Tables 6 and 7, to determine curing conditions. The object of the trials was to produce structural laminates having physical strengths and other characteristics comparable to resin-glass laminates made from epoxies and polyimides, and better than laminates as previously produced from phenol-formaldehyde and polyesters resins. The following Tables 6 and 7 exemplify the laminates of this invention.

TABLE 6: 12 ply glass-resin laminate test results

| Cure conditions | | Resin used | | Finished laminate characteristics | | | | | |
|---|---|---|---|---|---|---|---|---|---|
| Cure[1] temp. (°C) | Cure time (min) | Resin from indicated example | Resin content | Flexural strength (fed. 406 method) (MPa) | Flexural retention 2-hour water boil (ASTM D-790) (MPa) | Flexural strength post cure 2 hrs. at 125°C (ASTM D-790) (MPa) | Compressive strength (fed 406 method) (MPa) | Tensile strength (fed 406 method) (MPA) | Flexural modulus (ASTM D-790) (GPa) |
| 120 | 60 | #1 | 34.1 | 694 | 583 | 740 | 501 | 524 | 23.6 |
| | | #3 | 39.1 | 586 | 401 | 692 | 427 | 498 | 19.8 |
| 140 | 60 | #1 | 35.4 | 734 | 720 | 729 | 487 | 492 | 25.9 |
| | | #3 | 38.8 | 669 | 548 | 668 | 414 | 474 | 23.2 |
| 150 | 60 | #1 | 32.8 | 732 | 700 | 701 | 481 | 446 | 26.4 |
| | | #3 | — — — — — — — — — — — — — — —blistered; not measured— — — — —— — — —— — — — — — . | | | | | | |
| 140 | 45 | #1 | 32.6 | 743 | 675 | 745 | 465 | 483 | 26.5 |
| | | #3 | 39.7 | 658 | 514 | 660 | 425 | 499 | 22.4 |
| 140 | 75 | #1 | 32.3 | 763 | 732 | 679 | 487 | 475 | 27.9 |
| | | #3 | 39.7 | 679 | 562 | 707 | 414 | 501 | 22.8 |
| 140 | 90 | #1 | 35.3 | 692 | 670 | 596 | 441 | 405 | 25.7 |
| | | #3 | 37.9 | — — — — — — — — — — — — — blistered; not measured— — — — — — —— — — — — — | | | | | | |

Notes:
1. The laminate was heated straight up to indicated cure temperature, at a uniform rate, over a 30-min. period.
2. Press closure pressure in each case was 3.45 bar.
3. Pressure was applied with plys at ambient temperature, held during curing and subsequent cooling, and released when laminate had reached ambient.

TABLE 7: 12 Ply glass-resin laminate test results continued

| Cure conditions | | Resin used | Finished laminate characteristics | | | | | | |
| Press pressure (psig) | Press program | Resin from indicated example | Resin content | Flexural strength (fed. 406 method) (MPa) | Flexural retention 2-hour water boil (ASTM D-790) (MPa) | Flexural strength post cure 2 hrs. at 125°C (ASTM D-790) (MPa) | Compressive strength (fed 406 method) (MPa) | Tensile strength (fed 406 method) (MPa) | Flexural modulus (ASTM D-790) (GPa) |
|---|---|---|---|---|---|---|---|---|---|
| 15 | Contact pressure- 30 min; Indicated pressure- 45 min. | #1 #3 | 35.6 40.7 | 709 612 | 621 463 | 663 612 | 463 435 | 420 478 | 24.5 20.6 |
| 20 | „ | #1 #3 | 39.3 43.6 | 576 507 | 496 387 | 638 576 | 430 381 | 401 429 | 20.4 18.8 |
| 100 | „ | #1 #3 | 38.8 43.1 | 641 535 | 556 412 | 669 603 | 451 383 | 427 438 | 22.0 19.3 |
| 200 | „ | #1 #3 | 39.4 43.1 | 613 520 | 532 393 | 652 604 | 430 410 | 410 429 | 22.1 19.7 |

Notes:
1. The laminate was heated straight up to indicated cure temperature at a uniform rate, over a 30-min. period.
2. Cure time in each case was a total time of 75 minutes, including heating from room temperature and holding at cure temperature.
3. Cure temperature for each trial was 130°C.

# 0 064 055

The objective in pressing and curing the laminate is to keep the resin fluid long enough to obtain controlled migration of the resin, removal of air and bonding of the plies. At the same time, the resin must be retained in the cloth and not lost by flowing out of the press. Good resin to glass bonding is indicated by high compressive strengths. Good resin encapsulation of glass fibers is shown by high tensile strengths. The laminates should be resistant to attack by water. For example, a good laminate glass-thermoset resin composition normally retains a high percentage of its tensile strength after 2 hours in boiling water.

As a comparison, a commercial laminate made of epoxy resin may be characterized as having the following strengths: flexural strengths of 586 MPa (85,000 psi) compressive strengths of 407 MPa (59,000 psi) and tensile strengths of 494 MPa (71,600.) Typical polyimide laminates have approximately the following strengths: flexural of 684 MPa (99,200 psi) compressives of 483 MPa (70,000 psi;) tensiles of 494 MPa (71,600;) and a flexural modulus of 26,2 GPa ($3.8 \times 10^6$ psi.) Upon review of the tables, it is seen that the resols of this invention produce laminates of comparable strengths to the known laminates.

A study of the effect of press curing temperatures was made. The laminate was enclosed in the press at 3,95 bar (50 psig) at room temperature. Temperature was increased to the curing temperature selected and was held there for 60 minutes. The laminate was held under pressure after curing until cooled to room temperature. The data indicates that 135±5°C is the best cure temperature for both Examples 1 and 3 resin groups (F/P ratio or 2—3.2), with respect to wet flexural strength. Maximum cure temperature for the Example 1 resoles was 140°C. Higher temperature resulted in blistering and delamination. Flexural strength did increase with increased press temperature, however. For example, Example 1 strengths increased from 586 MPa (85,000 psi) cured at 120°C to 669 MPa (97,100 psi) when cured at 140°C, an improvement of 14.2%. Compressive and tensile strengths decreased 3.2 and 3.6% respectively. Both resin examples exhibited decreasing compressive and tensile strengths as the cure temperature increased.

For groups of laminates prepared from the Example 3 resols, lowering cure temperature to 100°C from 130°C improved resin retention by 3%. However, at the lower cure temperatures a higher percentage of volatiles is retained in the laminate. Limiting volatiles; i.e., including free formaldehyde, to low levels is, of course, important for commercial operations. Curing temperatures at 140°C produced lower compressive strengths (Example 3—465 MPa (67,400 psi) Example 1—421 MPa (61,000 psi) than previous tests, indicating that 140°C is probably exceeding the optimum temperature for good bonding with the silane finish system.

Water absorption of the laminates prepared from Example 3 increased as the cure temperature exceeded 130°C. Tensile strengths decreased with increasing cure temperature time.

A series of laminates was made, varying cure times between 45, 60, 75, and 90 minutes. The curing temperature and press closing pressure were held constant at 140°C and 3,45 bar (50 psig), respectively. The laminate was heated up to 140°C over a 30-minute period, held for the selected period of cure time and cooled to room temperature.

For example 3 laminates, dry flexural strength was highest at 45 and 60 minutes of cure. Maximum wet flexural retention appears to be obtained with the extended cure times. Tensile strength decreases as time is increased. For example, at 45 minutes, tensile was 482 MPa (70,000 psi) while at 90 minutes it declined to 405 MPa (58,700 psi.)

For Example 1 laminates, flexural strengths remained fairly unchanged regardless of cure time. However, 90 minutes at 140°C resulted in some blistering and delamination. Basically, the results indicated that a longer cure and lower temperature is preferred to shorter cures at higher temperature.

The temperature program used for curing laminates under pressure was varied to determine its effect on finished laminates, recognizing that substantial curing does not begin until about 100°C. The data showed that temperature curing cycles in two steps, four steps or straight up to the selected cure temperature do not affect retention of resin in the laminate. As an example, a press cycle was tried wherein the laminate at 3,45 bar (50 psig) was heated from room temperature to 100°C and held for 65 minutes; heated to 130°C and held for 75 minutes; and cooled to room temperature over 30 minutes. No significant change in finished laminate products resulted when compared with a one-step straight-up curing at 130°C. Laminate strength slightly improves with slow temperature rise but is not drastically reduced by faster rates. This suggests that large parts could be satisfactorily prepared where bulk size may require slow rates of heating. There were only minor differences between the cycles. Heating straight up to curing temperature is preferred because it is the least time consuming.

A study was made of the pressing schedule and press pressures to determine their effect on laminate characteristics. Cure conditions were fixed at 130°C for 75 minutes. The laminate was heated straight up to the 130°C.

The object of the pressing schedule test was to improve resin retention. The technique used was to hold the laminates at contact pressure; i.e., less than about 1,03 bar (15 psig), for varied periods of time before increasing pressure for finish curing. The precure laminate was heated to 130°C over a 30-minute period. The holding period thereafter at contact pressure was varied up to 30 minutes. The data indicated that at least 10 minutes was required to reduce resin loss appreciably. Significant improvement was obtained at 30 minutes holding time. For example, the Example 3 laminate group yielded laminates containing 39% resin from a 43% prepreg impregnated cloth level. For the Example 1 group, retention was 100% resulting in a 43% resin content of the finished laminate. The delayed pressure technique, of course, adds 30 minutes to the curing process time. A post-cure test indicated an increase in laminate strength of

16

# 0 064 055

about 68,9 MPa (10,000 psi) whereas laminates in previous tests at similar temperatures and time increased only 13,79 MPa (2,000 psi.) This indicates a longer time may be required to fully cure the resol when the delayed press technique is used.

For the cure pressure variation study, the laminate was held for 30 minutes at 130°C at contact pressure prior to the cure pressure application. The laminate was then held for 45 minutes under pressure. Selected pressures were 1,03, 1,38, 6,89 and 13,79 bar (15, 20, 100 and 200 psig.) Results showed that increased pressure results in decreased thickness and higher specific gravity. The laminates prepared at 1,03 bar (15 psig) exhibited good laminate characteristics. Example 3 laminates having an initial 38% resin content produced, cured laminates of 35% resin content having a flexural strength of 709 MPa (102,900 psi.)

Under similar staging and pressing conditions, Example 1 resols yield laminates with a higher resin content than Example 3 resols. Tensile strengths of Example 1 laminates are actually higher than those made from Example 3 resols, where resin contents are equal. Previously higher resin content of Example 1 laminates may have concealed the fact that the Example 1 resols yield stronger laminates where resin contents are equal. Example 1 laminates have a lower compressive strength. Thermal stability of the Example 1 resols is not as good as the Example 3 resols.

In sum, the studies of the conditions under which laminates can be made, with strengths and other characteristics comparable to or better than those previously known, demonstrates that a relatively wide range of working parameters, when compared to the previously known p-f laminating processes, yield acceptable results. This suggests that a laminator should be able to select a set of conditions that will produce satisfactory results within the design limits of his existing laminating line. The data does show that there are curing temperature limits beyond which blistered and delaminated products result. A lower limit appears to exist, where there is concern for the presence of excess volatiles, including free formaldehyde, in the finished laminate or workplace. Satisfactory laminates can be produced at low pressure. This indicates that vacuum bag curing should work as well as press curing.

An important advantage of the resols of this invention, as pointed out above, is that laminates therefrom have the fire-resistant characteristics that are inherent in the typical phenol-formaldehyde resins. These characteristics can now be incorporated in laminated products using the procedures shown in the above examples.

One means of measuring flammability is an Oxygen Index (OI) test. The Oxygen Index is defined as the minimum concentration of oxygen, expressed in volume percent, in a mixture of oxygen and nitrogen, that will just support flaming combustion. The test apparatus employed conformed to ASTM D 2863-70. Samples tested were the neat, undiluted (100%) resins, the 12-ply resin-glass laminate described above and a single-ply resin-glass sheet. Tests were run on a polyimide, phenolic, epoxy, melamine and furan resins. The neat resin samples were cast or molded and then machined to specimen size. The resin and resin-glass laminated samples were 6.5 mm wide by 3.0 mm thick by about 100 mm long. The single-ply tests used examples of 52 mm by 140 mm by 0.25 mm.

Tables 8 and 9 report Oxygen Index values for the above-indicated resins.

### TABLE 8: Oxygen index V temperature—neat resins

| | Room temperature | 100°C | 300°C |
|---|---|---|---|
| Example 1 (invention) | 43 | 36 | 31 |
| Melamine | 27 | 26 | 21 |
| Phenol-formaldehyde | 25 | 23 | 12 |
| Polyimide (polyamine bismaleimide) | 27 | 26 | 19 |
| Epoxy I (bisphenol A epoxy) | 23 | 22 | 13 |

17

**0 064 055**

TABLE 9: Oxygen index V. temperature—resin-glass laminate

| Resin tested | % Resin content | OI at Temperature | | |
| --- | --- | --- | --- | --- |
| | | Room temp. | 100°C | 300°C |
| Example 1 (invention) | 32 | 67 | 62 | 46 |
| Melamine | 39 | 56 | 50 | 34 |
| Polyimide | 30 | 45 | 42 | 31 |
| Phenol-formaldehyde | — | 25 | 23 | 12 |

The results indicate that the OI drops with increasing resin content. This is to be expected since the remaining constituents of the laminate are inert glass. The single-ply samples gave consistently higher values of OI than the neat samples and laminated specimens of the same resin.

Table 10 reports comparative measurements of the smoke evolved when laminates are exposed to flame. The data shows that the resols of this invention produce laminates that have a much lower relative smoke evolution than those produced from competing resins. The NBS smoke density test is described in NBS Technical Note No. 708 Appendix II utilizing an Aminco NBS Smoke Chamber.

TABLE 10: Smole density—NBS smoke density chamber

| Laminate | Maximum specific optical density | |
| --- | --- | --- |
| | Flaming conditions | Nonflaming conditions |
| Example 1 | 0.4 | 0.3 |
| Example 3 | 0.4 | 0.4 |
| Polyester | 60 | 69 |
| Melamine formaldehyde | 94· | 44 |
| Urea formaldehyde | 50 | 43 |
| Phenolic | 54 | 20 |
| Epoxy | 59 | 19 |

**Claims**

1. A phenol-formaldehyde resol, comprising a condensation product of formaldehyde and phenol in the molar ratios of 2.0—3.2:1, said resol being curable to an insoluble cross-linked, infusible solid at 100—150°C, wherein the formaldehyde content of the resol, prior to curing, analysed by carbon-13 nuclear magnetic resonance spectra, is bound to and distributed among phenol nuclei of the resol as formal groups of the form $Ph-(CH_2-O)_n-CH_2-OH$ $n \geq 1$; ether groups of the form $Ph-CH_2-O-CH_2-Ph$; methylol groups of the form $Ph-CH_2OH$ in an amount of about 9—40 molar percent; methylene groups of the form $Ph-CH_2-Ph$; and free formaldehyde in an amount of about 10—20 molar percent, wherein Ph indicates a phenol nucleus, characterized in that said resol is water-dilutable, prior to curing, and includes about 30—40 molar percent of said formal groups, about 5—10 molar percent of said ether groups and about 10—20 molar percent of said methylene groups, wherein the percentages indicated are the percent of the indicated group with respect to the total moles of formaldehyde charged to the resol system.

2. A process for making a phenol-formaldehyde resol according to claim 1, comprising:

— mixing phenol, water and 0.5—2.2 moles per 100 moles of phenol of an alkali catalyst material, wherein the pH of the reaction mixture is 7.0—10.9;

— adding formaldehyde to the reaction mixture such that the ratio of formaldehyde to phenol is 2.0—3.2:1;

18

— heating said reaction mixture to reflux temperature, with stirring, at a uniform rate over about a 1-hour period;

— refluxing said mixture until a viscosity of about 0.4—2.6 Pa · s (400—2 600 centipoise) at 50—78% resin solids content is attained;

— cooling the reaction mixture to 50°C; and

— adjusting the pH of the mixture with an acid to a pH of 3.0—7.0.

3. The process of claim 2, wherein said alkali catalyst material is selected from the group consisting of hydroxides and carbonates of lithium, sodium, potassium, magnesium and calcium.

4. The process of claim 2, wherein the alkali catalyst is 0.5—1.5 moles of catalyst per 100 moles of phenol, resulting in a reaction mixture pH of 7.2—8.2.

5. The process of claim 4, wherein said catalyst is lithium carbonate.

6. The process of claim 2, wherein the final pH adjusting step is accomplished with an acid selected from the group consisting of lactic, citric, oxalic, hypophosphorous, hydrochloric and sulfuric acids.

7. The process of claim 2, wherein said adjusting acid step is to a pH range of about 4—5.

8. The process of claim 7, wherein said acid is citric acid.

9. The process of claim 2, comprising:

— mixing phenol, water and 0.5—1.5 moles lithium carbonate catalyst wherein the pH of the mixture is 7.2—8.2;

— adding formaldehyde to the reaction mixture so that the ratio of formaldehyde to phenol is 2.0—3.2:1;

— heating said mixture to reflux temperature, at about 100—115°C at atmospheric pressure, with stirring, over a period of about 1 hour;

— refluxing said mixture until a viscosity of about 0.4—0.5 Pa · s (400—500 centipoise), at 60—75% by weight resin solids content, is attained;

— cooling said mixture; and

— neutralizing said mixture with citric acid to a final pH of 4.0—5.0,

wherein said finished resol remains soluble in a 20% by weight solution of isopropyl alcohol in a ratio of at least 0.5:1 resol to alcohol at 25°C and is suitable for making resin-glass cloth laminates.

10. A process for forming a heat-curable, phenol-formaldehyde glass fiber prepreg, including a glass fiber substrate, comprising:

— saturating said substrate with a phenol-formaldehyde resol according to claim 1;

— squeezing said saturated substrate until the desired level of resol is contained in the web;

— heating said matrix at 100—140°C for at least 2.0 minutes until a resin content of at least 30% is fixed in the web and the concentration of volatile materials remaining does not exceed 1.5 weight percent.

11. The heat-curable phenol-formaldehyde resin-glass fiber prepreg of claim 10.

12. The process of claim 10, wherein the process cure temperature is 125—140°C for at least about 2.0 minutes.

13. The process of claim 10, wherein the product of said process is formed into a fire-resistant phenol-formaldehyde resin-glass fiber laminate by additional processing steps, comprising:

— cutting the heat-curable phenol-formaldehyde resin-glass fiber prepreg of claim 10 into single sheets;

— assembling a plurality of said sheets into a precure laminate;

— pressing said precure laminate at contact pressure of about 0.14—1.03 bar (2—15 psig);

— heating said precure laminate, simultaneously with pressing at contact pressure, to about 100—130°C for 10—30 minutes;

— pressing said precured laminate at greater than contact pressures, in the range of 1.03—13.79 bar (15—200 psig); and

— continuing heating said laminate, simultaneously with pressing, at 100—140°C until the laminate is cured to a uniform, insoluble, infusible state.

14. The heat-curable phenol-formaldehyde resin-glass laminate of claim 13.

**Patentansprüche**

1. Phenol-Formaldehyd-Resol, umfassend ein Kondensationsprodukt aus Formaldehyd und Phenol in den molaren Verhältnissen von 2,0—3,2:1, wobei das Resol zu einem unlöslichen, quervernetzten, unschmelzbaren Festkörper bei 100—150°C aushärtbar ist, worin der Formaldehydgehalt des Resols vor dem Aushärten, analysiert durch Kohlenstoff-13-kernmagnetische Resonanzspektren, an Phenolkerne des Resols gebunden und unter ihnen als Formalgruppen der Form $Ph—(CH_2—O)_n—CH_2—OH$ $n \geq 1$; Ethergruppen der Form $Ph—CH_2—O—CH_2—Ph$; Methylolgruppen der Form $Ph—CH_2—OH$ in einer Menge von etwa 9—40 molaren Prozenten; Methylengruppen der Form $Ph—CH_2—Ph$; und freier Formaldehyd in einer

## 0 064 055

Menge von etwa 10—20 molaren Prozenten, verteilt ist, worin Ph einen Phenolkern bezeichnet; dadurch gekennzeichnet, daß das Resol vor dem Aushärten mit Wasser verdünnbar ist und etwa 30—40 molare Prozente der Formalgruppen, etwa 5—10 molare Prozente der Ethergruppen und etwa 10—20 molare Prozente der Methylengruppen beinhaltet, wobei die angegebenen Prozentsätze die Prozente der jeweiligen Gruppe, bezogen auf die gesamten Mole an dem Resolsystem zugegebenem Formaldehyd, angeben.

2. Verfahren zur Herstellung eines Phenol-Formaldehyd-Resols nach Anspruch 1, umfassend:

— Mischen von Phenol, Wasser und 0,5—2,2 Mole, pro 100 Mole an Phenol eines Alkalikatalysatormaterials, wobei der pH der Reaktionsmischung 7,0—10,9 beträgt;
— Zugeben von Formaldehyd zu der Reaktionsmischung, so daß das Verhältnis von Formaldehyd zu Phenol 2,0—3,2:1 beträgt;
— Erhitzen der Reaktionsmischung unter Rühren mit einer gleichförmigen Geschwindigkeit über eine Zeitdauer von etwa einer Stunde auf Rückflußtemperatur;
— Halten der Mischung unter Rückfluß bis eine Viskosität von etwa 0,4—2,6 Pa · s (400—2600 Centpoise) bei 50—78% Harzfeststoffgehalt erreicht ist;
— Kühlen der Reaktionsmischung auf 50°C; und
— Einstellen des pH der Mischung mit einer Säure auf einen pH von 3,0—7,0.

3. Verfahren nach Anspruch 2, wobei das Alkalikatalysatormaterial aus der Gruppe Hydroxide und Carbonate von Lithium, Natrium, Kalium, Magnesium und Calcium gewählt wird.

4. Verfahren nach Anspruch 2, wobei der Alkalikatalysator in einer Menge von 0,5—1,5 Mole Katalysator pro 100 Mole Phenol vorliegt, wodurch ein pH der Reaktionsmischung von 7,2—8,2 resultiert.

5. Verfahren nach Anspruch 4, wobei der Katalysator Lithiumcarbonat ist.

6. Verfahren nach Anspruch 2, wobei die endgültige pH-Einstellungsstufe mit einer Säure, gewählt aus der Gruppe Milchsäure, Zitronensäure, Oxalsäure, Hypophosphorsäure, Salzsäure und Schwefelsäure durchgeführt wird.

7. Verfahren nach Anspruch 2, wobei die Säureeinstellungsstufe auf einen pH-Bereich von etwa 4—5 erfolgt.

8. Verfahren nach Anspruch 7, wobei die Säure Zitronensäure ist.

9. Verfahren nach Anspruch 2, umfassend:

— Mischen von Phenol, Wasser und 0,5—1,5 Mole Lithiumcarbonat-Katalysator, wobei der pH der Mischung 7,2—8,2 beträgt;
— Zugeben von Formaldehyd zu der Reaktionsmischung, so daß das Verhältnis von Formaldehyd zu Phenol 2,0—3,2:1 beträgt;
— Erhitzen der Mischung unter Rühren auf Rückflußtemperatur von etwa 100—115°C bei Atmosphärendruck über einen Zeitraum von etwa 1 Stunde;
— Halten der Mischung unter Rückfluß, bis eine Viskosität von etwa 0,4—0,5 Pa · s (400—500 Centipoise) bei einem Harzfeststoffgehalt von 60—75 Gew.-% erreicht ist;
— Kühlen der Mischung; und
— Neutralisieren der Mischung mit Zitronensäure auf einen End-pH von 4,0—5,0,

wobei das fertige Resol in einer 20 gew.-%igen Lösung von Isopropylalkohol in einem Verhältnis von mindestens 0,5:1 Resol zu Alkohol bei 25°C löslich bleibt und zur Herstellung von Harz -Glasgewebe-Laminaten geeignet ist.

10. Verfahren zur Herstellung eines wärmehärtbaren, vorimprägnierten Phenol-Formaldehyd-Glasfasermaterials, das ein Glasfasersubstrat enthält, umfassend:

— Sättigen des Substrats mit einem Phenol-Formaldehyd-Resol nach Anspruch 1;
— Abquetschen des gesättigten Substrats, bis der gewünschte Resolgehalt in dem Gewebe enthalten ist;
— Erhitzen der Matrix bei 100—140°C über mindestens 2,0 Minuten, bis ein Harzgehalt von mindestens 30% im Gewebe fixiert ist und die Konzentration an verbleibendem, flüchtigem Material nicht über 1,5 Gew.-% liegt.

11. Wärmehärtbares, vorimprägniertes Phenol-Formaldehyd-Harz-Glasfasermaterial nach Anspruch 10.

12. Verfahren nach Anspruch 10, wobei die Härtungstemperatur des Verfahrens 125—140°C für wenigstens etwa 2,0 Minuten beträgt.

13. Verfahren nach Anspruch 10, wobei das Verfahrensprodukt durch zusätzliche Verfahrensstufen zu einem feuerbeständigen Phenol-Formaldehyd-Harz-Glasfaserlaminat ausgebildet wird, umfassend:

— Schneiden des wärmehärtbaren, vorimprägnierten Phenol-Formaldehyd-Harz-Glasfasermaterials nach Anspruch 10 zu einzelnen Platten;
— Zusammenfügen einer Vielzahl dieser Platten zu einem vorhärtbaren Laminat;

20

— Pressen des vorhärtbaren Laminats bei einem Kontaktdruck von etwa 0,14—1,03 Bar (2—15 psig);
— Erhitzen des vorhärtbaren Laminats unter gleichzeitigem Pressen bei dem Kontaktdruck auf etwa 100—130°C für 10—30 Minuten;
— Pressen des vorgehärteten Laminats bei einem größeren Druck als den Kontaktdrucken, im Bereich von 1,03—13,79 Bar (15—200 psig); und
— weiteres Erhitzen des Laminats unter gleichzeitigem Pressen bei 100—140°C, bis das Laminat zu einem gleichförmigen, unlöslichen, unschmelzbaren Zustand ausgehärtet ist.

14. Hitzehärtbares Phenol-Formaldehyd-Harz-Glasfaserlaminat nach Anspruch 13.

**Revendications**

1. Un résol phénol-formaldéhyde, comprenant un produit de condensation de formaldéhyde et de phénol, en rapports molaires de 2,0—3,2:1, le dit résol étant capable de durcir en un solide réticulé insoluble et infusible à 100—150°C, dans lequel la teneur en formaldéhyde du résol, avant durcissement, caractérisée par des spectres de résonnance magnétique nucléaire au carbone 13, est liée et distribuée parmi les noyaux de phénol du résol sous la forme de groupes formal de la forme $Ph—(CH_2—O)_n—CH_2—OH$, $n \geq 1$; de groupes éther de la forme $Ph—CH_2—O—CH_2—Ph$; de groupes méthylol de la forme $Ph—CH_2—OH$ à raison d'environ 9 à 40 moles pour cent; de groupes méthylène de la forme $Ph—CH_2—Ph$; et de formaldéhyde libre à raison d'environ 10 à 20 moles pour cent, Ph indique un noyau de phénol, caractérisé en ce que le dit résol est diluable par l'eau, avant durcissement, et contient environ 30 à 40 moles pour cent des dits groupes formal, environ 5 à 10 moles pour cent des dits groupes éther et environ 10 à 20 moles pour cent des dits groups méthylène, les pourcentages indiqués étant les pourcentages du groupe indiqué par rapport au nombre total de moles de formaldéhyde chargées dans le système de résol.

2. Procédé pour la préparation d'un résol phénol-formaldéhyde selon la revendication 1, comprenant les étapes selon lesquelles:

— on mélange du phénol, de l'eau et 0,5—2,2 moles pour 100 moles de phénol d'une matière catalytique alcaline, le pH du mélange réactionnel étant de 7,0—10,9;
— on ajoute du formaldéhyde au mélange réactionnel de manière que le rapport du formaldéhyde au phénol soit d'environ 2,0—3,2:1;
— on chauffe le dit mélange réactionnel à la température de reflux, en agitant, à une vitesse uniforme en une période d'environ 1 heure;
— on chauffe ce mélange au reflux jusqu'à ce qu'il atteigne une viscosité d'environ 0,4—2,6 Pa · s (400—2 600 centipoises) a une teneur en matières solides résineuses de 50—78%;
— on refroidit le mélange réactionnel à 50°C; et
— on règle le pH du mélange avec un acide à un niveau de 3,0—7,0.

3. Procédé selon la revendication 2, dans lequel la dite matière catalytique alcaline est choisie dans le groupe constitué par les hydroxydes et les carbonates de lithium, de sodium, de potassium, de magnésium et de calcium.

4. Procédé selon la revendication 2, dans lequel le catalyseur alcalin constitué de 0,5—1,5 moles de catalyseur pour 100 moles de phénol, ce qui conduit à un mélange réactionnel de pH 7,2—8,2.

5. Procédé selon la revendication 4, dans lequel le catalyseur est le carbonate de lithium.

6. Procédé selon la revendication 2, dans lequel l'étape de réglage du pH final est accomplie avec un acide choisi dans le groupe constitué par les acides lactique, citrique, oxalique, hypophosphoreux, chlorhydrique et sulfurique.

7. Procédé selon la revendication 2, dans lequel la dite étape de réglage acide est dans une gamme de pH d'environ 4—5.

8. Procédé selon la revendication 7, dans lequel le dit acide est l'acide citrique.

9. Procédé selon la revendication 2, comprenant les étapes selon lesquelles:

— on mélange du phénol, de l'eau et 0,5—1,5 moles de catalyseur carbonate de lithium, le pH du mélange étant de 7,2—8,2;
— on ajoute du formaldéhyde au mélange réactionnel de manière que le rapport du formaldéhyde au phénol soit de 2,0—3,2:1;
— on chauffe ce mélange à la température de reflux, à environ 100—115°C, sous la pression atmosphérique, en agitant, en une période d'environ 1 heure;
— on chauffe ce mélange au reflux jusqu'à ce qu'il atteigne une viscosité d'environ 0,4—0,5 Pa · s (400—500 centipoises), à une teneur en matières solides résineuses de 60—75% en poids;
— on refroidit le dit mélange; et
— on neutralise ce mélange avec de l'acide citrique jusqu'à un pH final de 4,0—5,0,

dans lequel le dit résol fini reste soluble dans une solution à 20% en poids d'alcool isopropylique en un rapport d'au moins 0,5:1 du résol à l'alcool, à 25°C, et convient pour fabriquer des stratifiés de résine-tissu de verre.

10. Procédé de formation d'un "prepreg" de fibre de verre à la résine phénol-formaldéhyde thermodurcissable, contenant un substrat de fibre de verre, comprenant les étapes selon lesquelles:

— on sature le dit substrat d'un résol phénol-formaldéhyde selon la revendication 1:

— on presse le dit substrat saturé jusqu'à ce que la quantité désirée de résol soit contenue dans le voile;

— on chauffe le dite matrice à 100—140°C pendant au moins 2,0 minutes, jusqu'à ce qu'une quantité de résine d'au moins 30% soit fixée dans le voile et que la concentration des matières volatiles restantes ne dépasse pas 1,5% en poids.

11. Les "prepreg" de fibre de verre à la résine phénolformaldéhyde thermodurcissables selon la revendication 10.

12. Procédé selon la revendication 10, dans lequel la température de durcissement du procédé est de 125—140°C pendant au moins environ 2,0 minutes.

13. Procédé selon la revendication 10, dans lequel le produit du dit procédé est formé pour donner un stratifié de fibre de verre à la résine phénol-formaldéhyde résistant au feur par les étapes de transformation supplémentaires, selon lesquelles:

— on coupe le "prepreg" de fibre de verre à la résine phénol-formaldéhyde thermodurcissable selon la revendication 10 en feuilles simples;

— on assemble une multiplicité de ces feuilles de manière à former un stratifié prédurci;

— on presse le dit stratifié prédurci sous une pression de contact d'envion 0,14—1,03 bar (2—15 psig);

— on chauffe ce stratifié prédurci, en même temps qu'on le presse à la pression de contact, à environ 100—130°C pendant 10—30 minutes;

— on presse ce stratifié prédurci à une pression supérieure à la pression de contact, dans l'intervalle de 1,03—13,79 bars (15—200 psig); et

— on poursuit le chauffage de ce stratifié, en même temps qu'on le presse, à 100—140°C, jusqu'à ce que le stratifié soit durci à un état uniforme, insoluble et infusible.

14. Stratifié de résine phénol-formaldéhyde/verre thermodurcissable selon la revendication 13.

Fig.1

F/p = 3.14

Ph·CH₂·O·CH₂OH

Ph·CH₂·O·CH₂OH

para PhCH₂OH

ortho PhCH₂OH

Ph–CH₂·O·(CH₂·O)ₙ H n>1

Ph–CH₂·O·CH₂·Ph

0 064 055

Fig.2

PhCH₂OCH₂OH

F/P = 2.65

0 064 055

*Fig.3*

F/p = 5.00

1″ Ph-CH₂-O-CH₂-OH

4″ Ph-CH₂-O-CH₂OH

8″

2″

5″
6″ para PhCH₂Ph

3″

7″ ortho PhCH₂OH

9″

10″

11″ DMSO SOLVENT

12″

Ph-CH₂-O-(CH₂-O)ₙH, n>1

Ph-CH₂-O-CH₂-Ph

0 064 055